# FASCICULE DE BREVET EUROPEEN

(11) **EP 0 947 873 B1**
(45) Date de publication et mention de la délivrance du brevet: **02.07.2008**
(21) Numéro de dépôt: 98105940.5
(22) Date de dépôt: 01.04.1998
(51) Int. Cl.: G02F 1/1333

(54) **Procédé de fabrication de cellules électro-optiques, notamment à cristaux liquides, ou de cellules photovoltaiques électrochimiques**
Herstellungsverfahren elektro-optischer Zellen, insbesondere mit Flüssigkristallen, oder photovoltaischer elektrochemischer Zellen
Method for manufacturing electro-optical cells, in particular comprising liquid crystals, or photovoltaic electrochemical cells

(43) Date de publication de la demande: 06.10.1999
(73) Titulaire: EM Microelectronic-Marin SA, 2074 Marin (CH)
(72) Inventeur: Bon, Patrick, 2068 Hauterive (CH)
(74) Mandataire: Balsters, Robert

(56) Documents cités:
- EP-A- 0 860 732
- WO-A-95/19587
- GB-A- 1 395 426
- GB-A- 2 269 910
- JP-A- 5 253 843
- US-A- 5 492 582

## Description

La présente invention concerne un procédé de fabrication de cellules électro-optiques, notamment à cristaux liquides, ou de cellules photovoltaïques électrochimiques, chaque cellule comprenant une lame avant transparente et une lame arrière transparente ou non sur lesquelles on réalise un réseau d'éléments conducteurs formant des électrodes et des pistes conductrices reliant ces électrodes à des contacts de connexion, les deux lames étant réunies entre elles au moyen d'un cadre de scellement définissant un volume étanche dans lequel est emprisonné un milieu actif.

Par cellule électro-optique on entend une cellule d'affichage dont les caractéristiques électro-optiques des cristaux liquides emprisonnés entre les deux lames de cette cellule peuvent être modifiées par des signaux électriques de commande appliqués aux électrodes. Par ailleurs, les cellules photovoltaïques électrochimiques sont des cellules capables de convertir la lumière visible en électricité en exploitant l'effet photoélectrique qui apparaît dans un substrat semi-conducteur sensibilisé par un colorant.

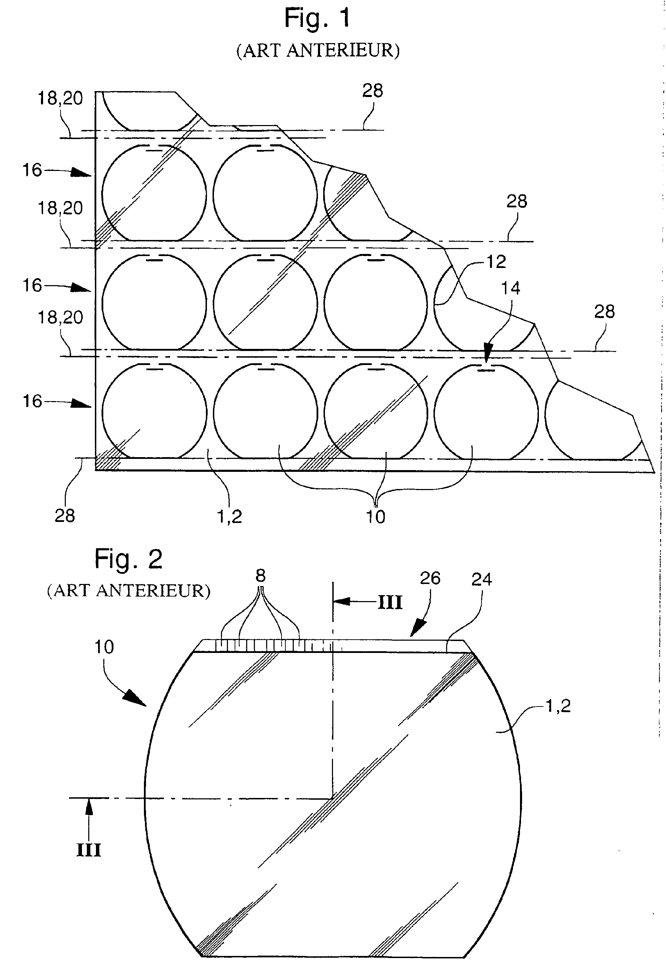

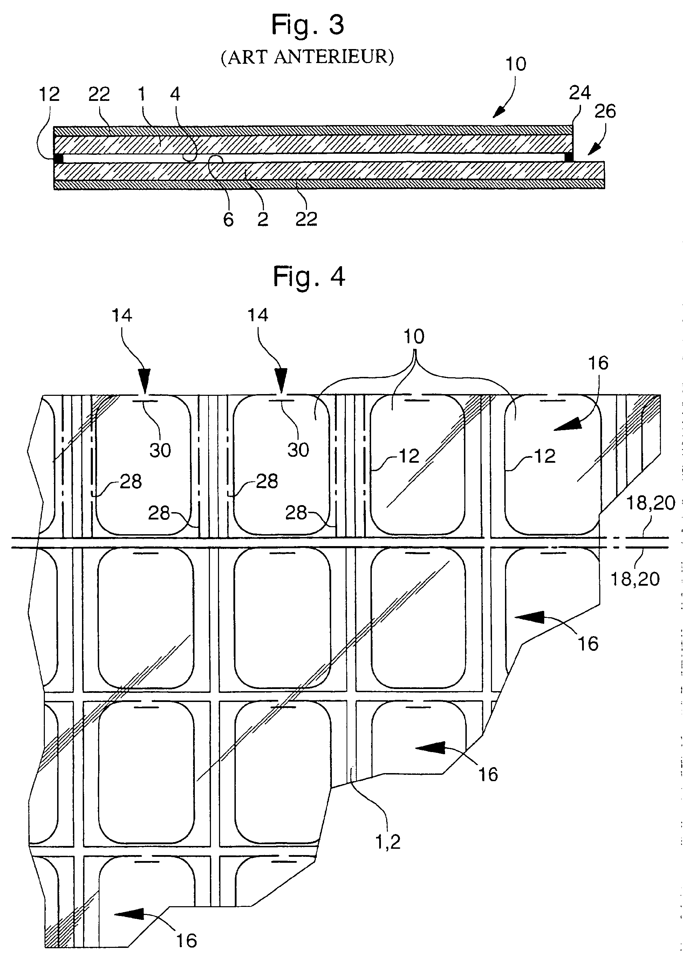

Un procédé de fabrication en lots de cellules d'affichage à cristaux liquides du genre décrit ci-dessus va être examiné en référence aux figures 1 à 3 annexées à la présente demande, la figure 1 étant une vue schématique partielle en plan d'un lot de cellules d'affichage à cristaux liquides en cours de fabrication, et les figures 2 et 3 étant des vues respectivement en plan et en coupe selon la ligne III-III de la figure 2 d'une cellule d'affichage individuelle.

Un tel procédé est par exemple décrit dans le document WO95/19587.

Le procédé ci-dessus consiste à réaliser, classiquement par photolithographie, sur deux grands substrats respectivement avant 1 et arrière 2 en verre ou en un matériau synthétique dont l'un au moins est transparent, un réseau d'éléments conducteurs également transparents. Ces éléments conducteurs forment des électrodes de commande 4 et 6. Ces électrodes 4, 6 sont situées à l'emplacement des motifs à afficher et des pistes conductrices les relient à des contacts de connexion tels que 8 situés à la périphérie de chaque cellule 10. On dépose ensuite sur l'un des substrats 1, 2 un réseau de matière formant des cadres de scellement tels que 12 qui définissent chacun un volume étanche dans lequel seront ultérieurement emprisonnés les cristaux liquides. A cet effet, on ménage dans les cadres de scellement 12 une ouverture de remplissage 14 pour chaque cellule 10, puis on assemble les substrats 1, 2 pour former un ensemble comprenant plusieurs rangées de cellules 10 ouvertes. On divise alors cet ensemble en bandes rectilignes telles que 16 par des techniques de rayage et de cassure du verre, ou par sciage le long de lignes de partage telles que 18 qui forment les bords longitudinaux tels que 20 des bandes 16. Ces lignes de partage 18 sont rectilignes et parallèles et sont représentées en traits mixtes sur la figure 1. Les ouvertures de remplissage 14 étant toutes situées le long du même bord longitudinal 20 de la bande 16, il est facile de remplir les cellules 10 puis de sceller hermétiquement leurs ouvertures de remplissage 14. Les bandes 16 sont finalement divisées en cellules 10 individuelles rectangulaires selon des droites perpendiculaires aux précédentes. A ce stade, si le contour des cellules 10 doit présenter des parties s'écartant de la forme rectangulaire, on façonne ces parties par meulage. Les éventuelles couches extérieures telles que, par exemple, un film polarisant 22, sont appliquées ultérieurement, car elles risqueraient autrement d'être détériorées par les opérations de coupe et de meulage. Ces étapes de fabrication à effectuer individuellement sur chaque cellule 10 rendent la fabrication plus complexe et plus coûteuse que si elles pouvaient être faites sur un lot complet de cellules 10.

D'autre part, comme représenté sur les figures 2 et 3, chaque cellule 10 présente un bord rectiligne 24 où le substrat arrière 2 fait saillie par rapport au substrat avant 1, afin de laisser apparaître les contacts de connexion 8 et créer ainsi une zone de connexion 26 à laquelle on peut accéder pour établir la liaison électrique entre les électrodes 4, 6 de la cellule 10 et un circuit électrique de commande (non représenté) capable de modifier les caractéristiques électro-optiques des cristaux liquides. Comme il ressort de la figure 1, les zones de connexion 26 des cellules 10 sont toutes alignées le long de l'un des bords longitudinaux 20 des bandes 16 et sont opposées aux ouvertures de remplissage 14 des cellules 10.

Le bord rectiligne 24 des cellules 10 est classiquement tracé par rayage au moyen d'un outil à diamant, de sorte que l'on crée à la surface du substrat avant 1 des lignes de moindre résistance mécanique telles que 28, rectilignes et parallèles aux lignes de partage 18 précédemment citées. Après découpe d'une bande 16, le verre peut être cassé manuellement selon la ligne 28, par une légère flexion transversalement à ladite bande 16, laissant ainsi apparaître les contacts de connexion 8 des cellules 10.

L'opération de rayage et de cassure du verre ci-dessus est relativement simple à mettre en oeuvre. Les cellules 10 ainsi obtenues présentent néanmoins l'inconvénient notable de ne présenter qu'une unique zone de connexion 26, ce qui limite le nombre de contacts de connexion 8 disponibles, et donc le nombre de motifs qu'il est possible d'afficher au moyen d'une telle cellule 10. Pour remédier à cette difficulté, une solution connue consiste à multiplexer les électrodes 4, 6 des cellules 10, ce qui signifie qu'une même électrode peut commander l'affichage d'au moins deux motifs différents. On a néanmoins constaté que plus le taux de multiplexage des électrodes 4, 6 était élevé, moins les qualités optiques de l'affichage résultant étaient satisfaisantes.

Il existait donc un besoin dans l'état de la technique pour des cellules d'affichage présentant deux zones de connexion 26 au lieu d'une seulement. Face à ce problème, une solution possible aurait été d'envisager de disposer les zones de connexion 26 non plus à l'opposée des ouvertures de remplissage 14, c'est-à-dire longitudinalement aux bandes 16, mais transversalement à ces bandes 16. Un préjugé majeur s'est toutefois toujours opposé à la mise en oeuvre de cette solution.

Il est connu que le rayage du verre au moyen d'un outil à diamant crée à la surface de celui-ci un réseau de tensions mécaniques superficielles favorisant la cassure du verre à l'endroit où il a été rayé. Il était néanmoins communément admis jusqu'à aujourd'hui que le verre devait être cassé à bref délai après avoir été rayé. On pensait en effet que si tel n'était pas le cas, le réseau de tensions créé par le rayage du verre tendrait à se relâcher, de sorte que la cassure du verre deviendrait moins franche et présenterait des irrégularités inacceptables dans le domaine de la fabrication des cellules d'affichage. C'est pour cette raison que les zones de connexion 26 des cellules 10 ont jusqu'à présent toujours été alignées le long de l'un des bords longitudinaux 20 des bandes 16, de sorte que le verre du substrat avant 1 puisse être cassé peu de temps après avoir été rayé, c'est-à-dire immédiatement après découpe d'une bande 16. Par contre, dans l'hypothèse où les zones de connexion 26 seraient disposées transversalement à la bande 16, la flexion de cette bande 16 ne permettrait pas de casser le verre entre deux cellules 10 adjacentes. Cette opération devrait donc être réalisée après application des films polarisants 22, étape longue et délicate, et individualisation des cellules 10. On pensait ainsi que le temps écoulé entre le moment où le verre est rayé et le moment où celui-ci est cassé était trop important et rendait cette opération impossible en raison du phénomène de relaxation des contraintes décrit plus haut. C'est pourquoi l'homme du métier s'est jusqu'à aujourd'hui toujours détourné de cette solution.

La présente invention a pour but de remédier aux problèmes et inconvénients ci-dessus en proposant un procédé de fabrication collective de cellules électrooptiques ou photovoltaïques électrochimiques permettant de faire apparaître les contacts de connexion des électrodes des cellules en un endroit quelconque du périmètre desdites cellules.

Des procédés pour diviser un substrat en verre ou quartz au moyen d'un jet d'eau sont décrits dans les documents JP05253843 et GB1395426. Cependant, ces procédés ne sont pas décrits dans ces documents en combinaison avec des dispositifs d'affichage électro-optiques.

A cet effet, la présente invention a pour objet un procédé de fabrication d'une pluralité de cellules électro-optiques comprenant les étapes qui consistent à :
- réaliser sur deux substrats en verre ou en un matériau synthétique dont l'un au moins est transparent un réseau d'éléments conducteurs, ces éléments conducteurs formant des électrodes situées à l'emplacement des motifs à afficher et des pistes conductrices reliant ces électrodes à des contacts de connexion situés à la périphérie des cellules;
- déposer sur l'un des substrats un réseau de matière formant des cadres de scellement qui définissent pour chaque cellule un volume étanche destiné à emprisonner un milieu actif, chaque cadre présentant à cet effet une ouverture de remplissage;
- assembler les substrats pour former un lot comprenant plusieurs rangées de cellules;
- tracer par rayage sur l'un des substrats des bords rectilignes afin d'ultérieurement faire apparaître les contacts de connexion à la périphérie de chaque cellule, ces bords rectilignes étant situés en un endroit non opposé aux ouvertures de remplissage de celles-ci, et
- diviser le lot de cellules en bandes rectilignes comprenant chacune une rangée de cellules,
   ce procédé étant caractérisé en ce que chaque bande de cellules est divisée en cellules individuelles au moyen d'un jet d'eau l'action du jet d'eau étant suffisante pour provoquer la cassure du substrat préalablement traité par rayage selon ses bords rectilignes, laissant ainsi apparaître les contacts de connexion.

Grâce à ces caractéristiques, le procédé selon l'invention permet pratiquement de terminer les cellules alors qu'elles sont encore en bandes. Le jet d'eau étant très fin, il n'altère pas les parties voisines de la ligne de découpe, de sorte que l'on peut notamment appliquer toutes les couches extérieures telles qu'un film polarisant sur les Pots de cellules. Par ailleurs, le découpage n'a pas besoin d'être réalisé en ligne droite, mais peut suivre directement le contour final de chaque cellule, évitant ainsi tout façonnage ultérieur tel que le meulage. D'autre part, l'invention a permis de vaincre le préjugé très répandu selon lequel le verre devait être cassé à bref délai après avoir été rayé, sous peine de voir le réseau de contraintes engendré par la rayure se relâcher et la cassure du verre devenir moins franche. On constate en effet de façon surprenante que l'action du jet d'eau utilisé pour la division d'une bande de cellules en cellules individuelles est suffisante pour provoquer la cassure du verre selon un bord parfaitement rectiligne même lorsque ce bord a été tracé par rayage longtemps auparavant. En particulier, il est possible d'appliquer toutes les couches extérieures telles que, notamment, le film polarisant, avant individualisation des cellules. Or, il est connu que l'opération de collage des films polarisants est longue et délicate, introduisant de ce fait un délai important entre le moment où l'on raye le verre et le moment où on le casse. Toutefois, malgré ce retard, on constate que l'action du jet d'eau au moment de la découpe finale des cellules est suffisante pour casser le verre sans difficulté.

La cellule selon l'invention peut ainsi présenter plusieurs zones de connexion au lieu d'une seule, ce qui permet d'augmenter sensiblement le nombre de contacts de connexion de la cellule, et donc le nombre de motifs qu'il est possible d'afficher, et/ou de diminuer le taux de multiplexage des électrodes, ce qui favorise les qualités optiques de l'affichage.

D'autres caractéristiques et avantages de la présente invention apparaîtront plus clairement à la lecture de la description détaillée qui suit d'un exemple de mise en oeuvre du procédé selon l'invention, cet exemple étant donné à titre purement illustratif et non limitatif, en liaison avec les dessins annexés dans lesquels :
- la figure 1, déjà citée, est une vue schématique partielle en plan d'un lot de cellules d'affichage à cristaux liquides en cours de fabrication selon un procédé de l'art antérieur;
- la figure 2, déjà citée, est une vue en plan d'une cellule d'affichage individuelle selon l'art antérieur;
- la figure 3, déjà citée, est une vue en coupe selon la ligne III-III de la figure 2;
- la figure 4 est une vue partielle en plan d'un lot de cellules d'affichage à cristaux liquides en cours de fabrication selon le procédé de l'invention;
- la figure 5 est une vue en perspective d'un ensemble de cellules sous forme d'une bande, avant l'étape finale d'individualisation;
- la figure 6 est une vue en plan d'une cellule d'affichage selon l'invention, et
- la figure 7 est une vue en coupe selon la ligne VII-VII de la figure 6.

Dans tout ce qui suit, on désignera les éléments identiques à ceux décrits précédemment par les mêmes références numériques.

On notera tout d'abord que, bien que la présente invention soit décrite en référence à une cellule d'affichage électro-optique, elle s'applique de manière identique aux cellules photovoltaïques électrochimiques du genre décrit ci-dessus.

On représente sur la figure 4 un ensemble de cellules d'affichage 10 en cours de fabrication selon le procédé de l'invention. Ces cellules 10 sont définies entre deux substrats avant 1 et arrière 2 généralement transparents, par exemple deux plaques de verre.

Chaque cellule 10 comporte une cavité destinée à contenir les cristaux liquides, cette cavité étant définie par les substrats 1, 2 revêtus d'électrodes transparentes 4, 6, et par les cadres de scellement 12 faits d'une matière qui permet de solidariser les substrats 1, 2 l'un sur l'autre. Une ouverture de remplissage 14 est ménagée dans le cadre de scellement 12 de chaque cellule 10 en regard d'une cloison 30 servant à bloquer le bouchon de colle utilisé pour sceller l'ouverture 14 après remplissage des cellules 10.

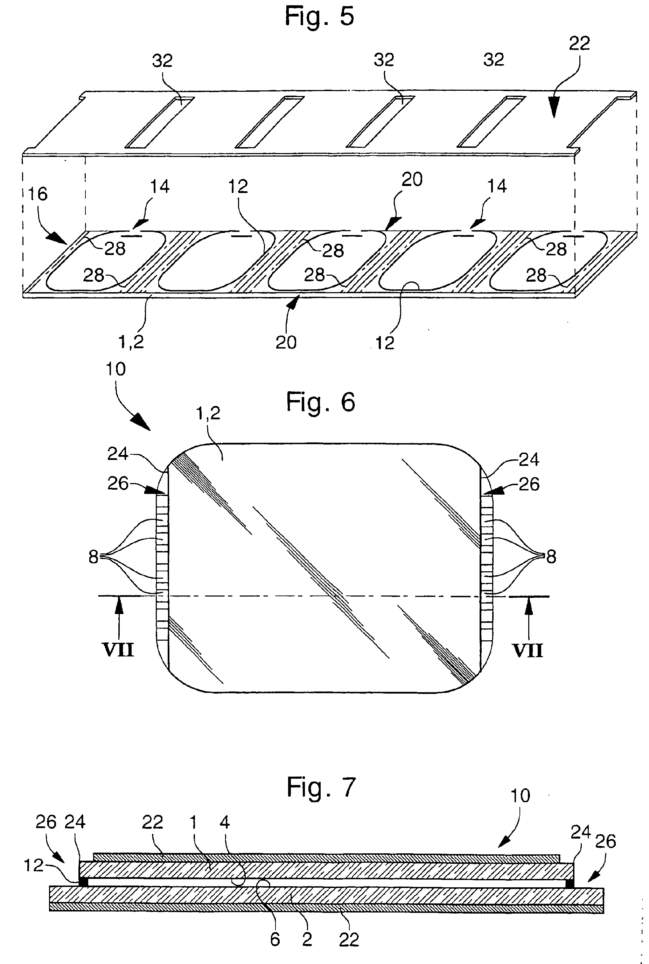

Selon la caractéristique essentielle de l'invention, et comme il ressort des figures 5 et 6, chaque cellule 10 présente deux bords rectilignes 24 où le substrat arrière 2 fait saillie par rapport au substrat avant 1, afin de laisser apparaître les contacts de connexion 8 et créer ainsi deux zones de connexion 26 auxquelles on puisse accéder pour établir la liaison électrique entre les électrodes 4, 6 de la cellule 10 et un circuit électrique de commande (non représenté). Il est ainsi possible d'augmenter le nombre de motifs qu'on peut afficher sur une cellule 10 et/ou de réduire le taux de multiplexage des électrodes 4, 6, ce qui permet d'améliorer les qualités optiques de l'affichage. Ce résultat essentiel est obtenu grâce au procédé selon l'invention préférentiellement mis en oeuvre de la manière décrite ci-dessous.

Après report des électrodes 4, 6 et des pistes reliant ces électrodes 4, 6 aux contacts de connexion 8, on dépose sur l'un des substrats 1, 2 la matière définissant les cadres de scellement 12, puis on assemble les substrats 1, 2 l'un sur l'autre. Pour chaque cellule 10, on trace ensuite par rayage du substrat avant 1 les deux bords rectilignes 24 qui permettront, dans une étape ultérieure, de faire apparaître les zones de connexion 28 correspondantes des cellules 10. Selon l'invention, les bords rectilignes 24, ménagés à la périphérie des cellules 10, ne sont pas opposés aux ouvertures de remplissage 14, mais disposés par exemple de part et d'autre de celles-ci. Après traçage des bords 24, l'ensemble de cellules 10 est divisé en bandes rectilignes 16 par des techniques de rayage et de cassure du verre, ou par sciage le long des lignes de partage 18. Les cellules 10 sont ensuite remplies avec du cristal liquide, puis hermétiquement scellées au moyen d'un bouchon de colle par des techniques connues. On peut alors appliquer sur chaque bande 16 toutes les couches extérieures nécessaires telles qu'un film polarisant 22. Comme représenté sur la figure 5, et selon une caractéristique avantageuse de l'invention, le film polarisant 22 présente des ouvertures ou dégagements tels que 32 correspondant aux endroits où le verre du substrat 1 sera ultérieurement cassé et éliminé afin de laisser apparaître les zones de connexion 28 des cellules 10.

La dernière étape de mise en oeuvre du procédé selon l'invention consiste à individualiser les cellules 10 au moyen d'une machine de découpage à jet d'eau sous haute pression. On constate alors de façon tout à fait surprenante que l'action du jet d'eau est suffisante pour provoquer la cassure du verre selon les bords rectilignes 24, bien que ceux-ci aient été tracés par rayage un certain temps auparavant. Ceci contredit le préjugé bien établi selon lequel le verre doit être cassé à bref délai après avoir été rayé. Il suffit ensuite de procéder aux tests de contrôle électrique des cellules 10.

Il va de soi que diverses modifications et variantes simples entrent dans le cadre de la présente invention.

## Revendications

1. Procédé de fabrication d'une pluralité de cellules (10) électro-optiques comprenant les étapes qui consistent à :
- réaliser sur deux substrats (1, 2) en verre ou en un matériau synthétique dont l'un au moins est transparent un réseau d'éléments conducteurs, ces éléments conducteurs formant des électrodes de commande (4, 6) situées à l'emplacement des motifs à afficher et des pistes conductrices reliant ces électrodes (4, 6) à des contacts de connexion (8) situés à la périphérie des cellules (10);
- déposer sur les substrats (1, 2) un réseau de matière formant des cadres de scellement (12) qui définissent pour chaque cellule (10) un volume étanche destiné à emprisonner un milieu actif, chaque cadre (12) présentant à cet effet une ouverture de remplissage (14);
- assembler les substrats (1, 2) pour former un lot comprenant plusieurs rangées de cellules (10);
- tracer par rayage sur l'un des substrats (1, 2) des bords rectilignes (24) afin d'ultérieurement apparaître les contacts de connexion (8) à la périphérie de chaque cellule (10), ces bords rectilignes (24) étant situés en un endroit non opposé aux ouvertures de remplissage (14) de celles-ci, et
- diviser le lot de cellules (10) en bandes rectilignes (16) comprenant chacune une rangée de cellules (10),
ce procédé étant **caractérisé en ce que** chaque bande (16) de cellules est divisée en cellules (10) individuelles au moyen d'un jet d'eau,
l'action du jet d'eau étant suffisante pour provoquer la cassure du substrat (1) préalablement traité par rayage selon ses bords rectilignes (24), laissant ainsi apparaître les contacts de connexion (8).

2. Procédé selon la revendication 1, **caractérisé en ce qu'**il comprend l'étape qui consiste à appliquer sur chaque bande (16) un film polarisant (22) présentant des dégagements (32) correspondant aux endroits où le verre du substrat (1, 2) sera ultérieurement cassé et éliminé afin de laisser apparaître les contacts de connexion (8) des cellules (10).

## Claims

1. Manufacturing method for a plurality of electro-optical cells (10) including the steps of :
- forming on two substrates (1, 2) which are made of glass or a synthetic material and at least one of which is transparent, a pattern of conductive elements, these conductive elements forming control electrodes (4, 6) situated at the location of pictures to be displayed and conductive paths connecting these electrodes (4, 6) to contact pads (8) situated at the periphery of the cells (10);
- depositing on one of the substrates (1, 2) a network of material forming sealing frames (12) which define for each cell (10) a sealed volume intended to confine an active medium, each frame (12) including a filling aperture (14) for this purpose;
- bonding the substrates (1, 2) to each other to form a batch including several rows of cells (10);
- scribing rectilinear edges (24) on one of the substrates (1, 2) in order to allow subsequently / later on the contact pads (8) to appear at the periphery of each cell (10), these rectilinear edges (24) being situated in a location which is not opposite the filling openings (14) thereof, and
- dividing the batch of cells (10) into rectilinear strips (16) each including a row of cells (10);
this method being **characterized in that** each strip (16) of cells is divided into individual cells (10) by means of a water jet, the action of the water jet being sufficient to provoke the break of the substrate (1) previously treated by scribing according to its rectilinear edges (24), allowing thus the contact pads (8) to appear

2. Method according to claim 1, **characterized in that** it includes the step of applying onto each strip (16) a polariser film (12) having recesses (32) corresponding to the locations where the glass of the substrate (1, 2) will subsequently be broken and removed in order to allow the contact pads (8) of the cells (10) to appear.

## Patentansprüche

1. Verfahren zum Herstellen mehrerer elektrooptischer Zellen (10), das die Schritte umfasst, die darin bestehen:
- auf zwei Substraten (1, 2) aus Glas oder aus einem Kunststoff, wovon wenigstens eines lichtdurchlässig ist, ein Gitter aus Leiterelementen zu verwirklichen, wobei diese Leiterelemente Steuerelektroden (4, 6), die sich am Ort der anzuzeigenden Muster befinden, und Leiterbahnen, die diese Elektroden (4, 6) mit Anschlusskontakten (8) verbinden, die sich am Umfang der Zellen (10) befinden, bilden;
- auf die Substrate (1, 2) ein Materialgitter aufzubringen, das Einkapselungsrahmen (12) bildet, die für jede Zelle (10) ein dichtes Volumen definieren, das dazu vorgesehen ist, ein aktives Medium einzuschließen, wobei jeder Rahmen (12) hierzu eine Befüllungsöffnung (14) aufweist;
- die Substrate (1, 2) zusammenzufügen, um ein Los zu bilden, das mehrere Reihen von Zellen (10) umfasst;
- durch Einritzen in einem der Substrate (1, 2) geradlinige Ränder (24) anzureißen, um später die Anschlusskontakte (8) an dem Umfang jeder Zelle (10) freizulegen, wobei sich diese geradlinigen Ränder (24) an einem Ort befinden, der sich nicht gegenüber den Befüllungsöffnungen (14) der Zellen befindet, und
- das Los von Zellen (10) in geradlinige Bänder (16) zu unterteilen, wovon jedes eine Reihe von Zellen (10) enthält,
wobei das Verfahren **dadurch gekennzeichnet ist, dass** jedes Band (16) von Zellen mittels eines Wasserstrahls in einzelne Zellen (10) unterteilt wird, wobei die Wirkung des Wasserstrahls ausreicht, um ein Brechen des Substrats (1), das vorher durch Ritzen bearbeitet worden ist, längs der geradlinigen Ränder (24) hervorzurufen und somit die Anschlusskontakte (8) freizulegen.

2. Verfahren nach Anspruch 1, **dadurch gekennzeichnet, dass** es den Schritt umfasst, der darin besteht, auf jedes Band (16) eine dünne Polarisationsschicht (22) aufzubringen, die Aussparungen (32) aufweist, die den Orten entsprechen, an denen das Glas des Substrats (1, 2) später gebrochen und entfernt wird, um die Verbindungskontakte (8) der Zellen (10) freizulegen.
